# EUROPÄISCHE PATENTSCHRIFT

(11) **EP 3 720 671 B1**
(45) Veröffentlichungstag und Bekanntmachung des Hinweises auf die Patenterteilung: **13.10.2021**
(21) Anmeldenummer: 18816016.2
(22) Anmeldetag: 06.12.2018
(51) Int. Cl.: B29B 11/16, B29C 35/08, B29D 99/00

(54) **VORRICHTUNG UND VERFAHREN ZUM HERSTELLEN VON VORFORMLINGEN**
DEVICE AND METHOD FOR PRODUCING PREFORMS
DISPOSITIF ET PROCÉDÉ POUR LA FABRICATION D'ÉBAUCHES

(30) Priorität: 08.12.2017 DE 102017011312
(43) Veröffentlichungstag der Anmeldung: 14.10.2020
(73) Patentinhaber: Broetje-Automation GmbH, 26180 Rastede (DE)
(72) Erfinder: REINHOLD, Raphael, 26409 Wittmund (DE)
(74) Vertreter: Gottschald Patentanwälte Partnerschaft mbB
(86) Internationale Anmeldenummer: PCT/EP2018/083837
(87) Internationale Veröffentlichungsnummer: WO 2019/110745

(56) Entgegenhaltungen:
- EP-A1- 2 018 950
- EP-A1- 2 805 802
- EP-A2- 1 116 575
- CN-A- 103 624 996
- DE-A1- 10 151 761
- DE-A1-102014 004 053
- US-A- 5 002 476
- US-A1- 2014 183 784
- HENNINGER F ET AL: "Production of textile reinforced thermoplastic profiles by roll forming", COMPOSITES PART A: APPLIED SCIENCE AND MANUFACTURING, ELSEVIER, AMSTERDAM, NL, Bd. 35, Nr. 5, 1. Mai 2004 (2004-05-01), Seiten 573-583, XP004499226, ISSN: 1359-835X, DOI: 10.1016/J.COMPOSITESA.2003.12.001

## Beschreibung

Die Erfindung betrifft eine Vorrichtung zum Herstellen von Vorformlingen für Flugzeugstrukturbauteile sowie ein Verfahren zum Herstellen von Vorformlingen für Flugzeugstrukturbauteile.

Die Verwendung von faserverstärkten Werkstoffen nimmt heutzutage stark zu. Dies gilt insbesondere für glasfaserverstärkte bzw. kohlefaserverstärkte Bauteile, deren Verwendung aufgrund der stetig steigenden Nachfrage nach Leichtbaulösungen zunimmt. Dies gilt in besonderem Maße für die Luft- und Raumfahrtindustrie sowie für die Automobilindustrie.

Eine große Herausforderung stellt jedoch immer noch die automatisierte Fertigung von glasfaserverstärkten bzw. kohlefaserverstärkten Bauteilen (GFK- bzw. CFK-Bauteilen) dar. So hat eine manuelle Bearbeitung hier noch immer einen großen Anteil in der Produktion.

In der Vergangenheit sind bereits viele Versuche unternommen worden, den Prozess zu teil- oder zu vollautomatisieren. Zur Herstellung von Flugzeugstrukturbauteilen, insbesondere von Stringern und/oder Spanten eines Flugzeugs, schlägt beispielsweise die DE 10 2010 014 704 A1 ein Verfahren zur Herstellung von Vorformlingen für Flugzeugstrukturbauteile vor, bei dem in einem ersten Schritt kontinuierlich zugeführte Faserlagen durch Querumformung in einen vorbestimmten Querschnitt umgeformt werden und bei dem das dann entstandene Querschnittsprofil in einem zweiten Schritt durch Längsumformung gezielt gekrümmt wird. Hier ist es bekannt, vor der Querumformung die Faserlagen mit einem Infrarotstrahler zu bestrahlen, um die noch lose aufeinander verlaufenden Faserlagen miteinander zu fixieren. Es hat sich nun herausgestellt, dass durch das einfache Bestrahlen der Faserlagen nur sehr schwer ein gleichmäßiges Erwärmen der Faserlagen erreichbar ist. Dies führt dazu, dass Teilbereiche der Faserlagen zu stark während andere nicht genügend erwärmt werden. Zudem haben schwankende Umgebungsbedingungen einen erheblichen Einfluss auf die Qualität der Verbindung der Faserlagen. Dies führt zu erheblichen Qualitätsunterschieden bei den Bauteileigenschaften der produzierten Vorformlinge,

Die Dokumente EP 2 805 802 A1, US 2014/183784 A1, HENNINGER F ET AL: "Production of textile reinforced thermoplastic profiles by roll forming",COMPOSITES PART A: APPLIED SCIENCE AND MANUFACTURING, ELSEVIER, AMSTERDAM, NL, Bd. 35, Nr. 5, 1. Mai 2004 (2004-05-01), Seiten 573-583,ISSN: 1359-835X, DOI: 10.1016/J.COMPOSITESA.2003.12.001, EP 2 018 950 A1, DE 101 51 761 A und CN 103 624 996 A offenbaren eine Vorrichtung und ein Verfahren zum Herstellen von Vorformlingen für Flugzeugstrukturbauteile, mit einer Bereitstellungseinheit zum kontinuierlichen Bereitstellen von einem Schichtaufbau mit mindestens einer Faserlage, mit einer Heizeinheit mit mindestens einem Infrarotheizer, welcher eine Infrarotstrahlungsquelle aufweist, wobei der bereitgestellte Schichtaufbau in einer Förderrichtung durch die Heizeinheit hindurchgeführt wird und dort über zumindest einen Teil seiner Breite im Querschnitt durch den mindestens einen Infrarotheizer erwärmbar ist.

Aufgabe der vorliegenden Erfindung ist es daher, die vorstehend beschriebene Vorrichtung derart weiterzubilden und auszugestalten, dass Vorformlinge mit gleichbleibend hohen Bauteileigenschaften durch eine stabile Prozessführung und einen sicheren Fertigungsprozess hergestellt werden können.

Gelöst wird die vorstehend genannte Aufgabe durch die Merkmale von Anspruch 1.

Die vorschlagsgemäße Vorrichtung zum Herstellen von Vorformlingen für Flugzeugstrukturbauteile weist eine Bereitstellungseinheit zum kontinuierlichen Bereitstellen von einem Schichtaufbau mit mindestens einer Faserlage auf. Ferner weist sie eine Heizeinheit mit mindestens einem Infrarotheizer, welcher eine Infrarotstrahlungsquelle aufweist, auf. Der bereitgestellte Schichtaufbau wird hier in einer Förderrichtung durch die Heizeinheit hindurchgeführt und dort über zumindest einen Teil seiner Breite im Querschnitt durch den mindestens einen Infrarotheizer erwärmt. Dabei ist zwischen dem Schichtaufbau und dem Infrarotheizer eine infrarotstrahlungsdurchlässige Scheibe angeordnet.

Hierdurch wird ein relativ geschützter Raum zwischen der Faserlage und der Scheibe geschaffen, in welchem ein sehr gleichmäßiges Erwärmen des Schichtaufbaus erreicht wird. Darüber hinaus wird der Einfluss von Umweltver-änderungen auf den Erwärmungsprozess erheblich reduziert. Beispielsweise wird der Einfluss von plötzlichen Temperaturschwankungen in einer Fertigungshalle, etwa wenn im Winter ein Hallentor geöffnet wird, auf einfache Art und Weise erheblich reduziert und es kann eine im Wesentlichen konstante Temperatur deutlich besser beibehalten werden. Der Einfluss solcher Umgebungseinflüsse ist durch das Vorsehen einer Scheibe erheblich geringer, als wenn ein Infrarotstrahler einfach frei über eine Faserlage positioniert würde.

Zudem lässt sich die Temperatur in dem geschützten Raum zwischen Schichtaufbau und Scheibe auch ganz besonders einfach über die Energiezufuhr mittels des Infrarotstrahlers regeln, da ein fest bestimmter und in seinen Dimensionen durch Scheibe und Faserlage begrenzter Bereich erwärmt wird.

Darüber hinaus kann auf diese Weise zwischen dem Schichtaufbau und der Scheibe ein Strömungskanal bereitgestellt werden, welcher ein sehr gleichmäßiges Erwärmen des Schichtaufbaus ermöglicht.

Durch dieses besonders gleichmäßige und gut steuerbare Erwärmen wird durch die vorschlagsgemäße Vorrichtung die Prozessqualität bei der Fertigung von Vorformlingen für Flugzeugstrukturbauteile erheblich verbessert.

Gemäß Anspruch 2 kann zum Schneiden des Schichtaufbaus, insbesondere entlang der Förderrichtung, eine Schneideinheit und/oder zum Umformen des Schichtaufbaus in ein Querschnittsprofil eine Querumformungseinheit vorgesehen sein.

Weitere den Aufbau der Vorrichtung und insbesondere die Anordnung von Schichtaufbau und Scheibe zueinander betreffende Merkmale sind in den Ansprüchen 3 bis 6 beschrieben.

Bevorzugte Ausgestaltungen des Infrarotheizers werden in den Ansprüchen 7 und 8 beschrieben. Anspruch 9 betrifft die Steuerung der Infrarotstrahlungsquelle.

Gemäß Anspruch 10 weist die Heizeinheit mindestens einen weiteren Infrarotheizer auf. Hierdurch kann eine noch homogenere Temperaturverteilung erreicht bzw. es können weitere Abschnitte des Schichtaufbaus effizient erwärmt werden.

Gemäß Anspruch 11 kann zum besseren Verbinden von Faserlagen miteinander eine Kompaktierungseinheit vorgesehen sein.

Darüber hinaus wird die eingangs beschriebene Aufgabe verfahrensmäßig mit den Merkmalen des Anspruchs 12 gelöst.

Es ergeben sich dieselben Vorteile, wie vorstehend in Verbindung mit der Vorrichtung beschrieben. Es wird darauf hingewiesen, dass mit der Vorrichtung das vorschlagsgemäße Verfahren durchgeführt werden kann.

Bevorzugte Ausgestaltungen des Verfahrens sind in den Ansprüchen 13 bis 15 beschrieben.

Im Folgenden wird die Erfindung anhand einer lediglich bevorzugte Ausführungsbeispiele darstellenden Zeichnung näher erläutert. In der Zeichnung zeigt
- Fig. 1: in a) schematisch eine dreidimensionale Darstellung eines Flugzeugs mit einem Flugzeugstrukturbauteil, in b) schematisch eine dreidimensionale Darstellung sowie einen Querschnitt eines Vorformlings für ein Flugzeugstrukturbauteil wie in a) gezeigt, welcher mit der vorschlagsgemäßen Vorrichtung bzw. dem vorschlagsgemäßen Verfahren herstellbar ist,
- Fig. 2: in a) eine schematische Darstellung eines Ausführungsbeispiels der vorschlagsgemäßen Vorrichtung bzw. des vorschlagsgemäßen Verfahrens, in b) eine schematische Darstellung des Schichtaufbaus vor dem Eintritt in die Heizeinheit im Schnitt, in c) eine schematische Darstellung im Schnitt durch die Heizeinheit, in d) eine schematische Darstellung im Schnitt durch die Schneideinheit, in e) eine schematische Darstellung im Schnitt durch die Querumformungseinheit, in f) eine schematische Darstellung der Herstellung des Flugzeugstrukturbauteils in einem Autoklaven,
- Fig. 3: eine schematische Darstellung eines Ausführungsbeispiels der Heizeinheit in einer dreidimensionalen Ansicht,
- Fig. 4: eine schematische Darstellung eines Schnittes durch die Heizeinheit gemäß IV aus Fig. 3,
- Fig. 5: eine schematische Darstellung eines Schnittes eines weiteren Ausführungsbeispiels analog Fig. 4,
- Fig. 6: in a) und b) unterschiedliche dreidimensionale Darstellungen eines Infrarotheizers und
- Fig. 7: einen Schnitt durch einen Infrarotheizer gemäß Fig. 6.

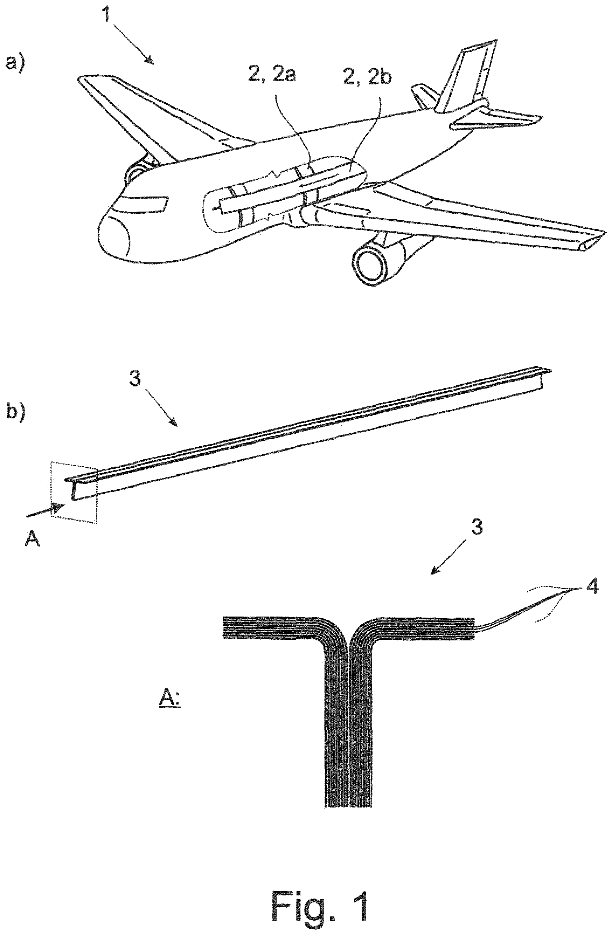

Die Fig. 1a) zeigt ein Flugzeug 1 mit Flugzeugstrukturbauteilen 2. In dem Ausbruch der Figur 1a) sind beispielsweise Spanten 2a und Stringer 2b als solche Flugzeugstrukturbauteile 2 gezeigt.

Heute werden diese Flugzeugstrukturbauteile 2 auch als faserverstärkte Bauteile hergestellt. Hierzu werden in der Regel zunächst sogenannte Vorformlinge 3 hergestellt. Diese Vorformlinge 3 werden anschließend zu den Flugzeugstrukturbauteilen 2 weiterverarbeitet.

Ein solcher Vorformling ist in der Fig. 1 b) in einer dreidimensionalen Darstellung und im Schnitt gezeigt. Wie der Figur zu entnehmen ist, besteht dieser Vorformling hier und vorzugsweise aus mehreren Faserlagen 4.

Die Faserlagen 4 weisen ein Fasermaterial auf. Dies können Trockenfasern, Rowings, Gewebe, Gelege, Fleece und/oder Geflechte sein. Bevorzugt sind die Faserlagen sogenannte Prepregs, d. h. vorimprägnierte Faserlagen. Diese sind vorzugsweise mit einem Reaktionsharz, vorzugsweise auf Epoxidharzbasis, vorimprägniert.

Im Ausführungsbeispiel hat der Vorformling ein T-Profil. Diese können jedoch auch in anderen Profilformen hergestellt werden, wie beispielsweise als L-, U- und/oder V-Profil.

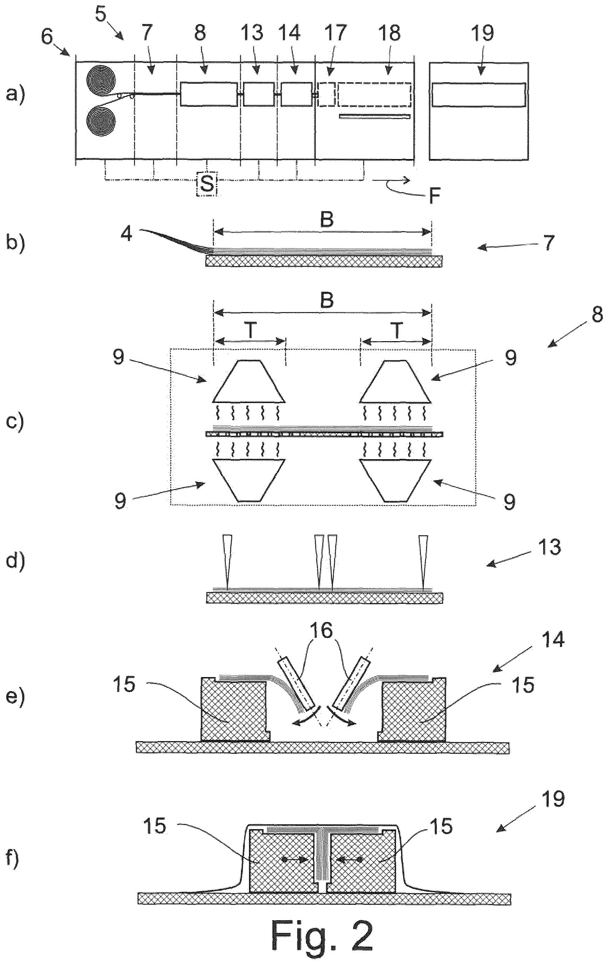

Die Fig. 2a) zeigt schematisch ein Ausführungsbeispiel einer Vorrichtung 5 zum Herstellen eines Vorformlings 3 in einer Seitenansicht. In den Figuren 2b), 2c) und 2d) sind dann einzelne Schritte der Herstellung des Vorformlings 3 schematisch in einer Schnittdarstellung quer zur Förderrichtung F gezeigt.

Die Vorrichtung 5 weist eine Bereitstellungseinheit 6 zum kontinuierlichen Bereitstellen von einem Schichtaufbau 7 mit mindestens einer Faserlage 4 auf. Hier und vorzugsweise weist der Schichtaufbau 7 mindestens zwei oder drei Faserlagen 4 auf. Der Schichtaufbau 7 kann, insbesondere fertig konfektioniert, auf einer Rolle 8 bereitgestellt sein, oder, es können mehrere Rollen 8 mit Faserlagen 4 vorgesehen sein, deren Faserlagen zu einem Schichtaufbau in der Vorrichtung 5 zusammengeführt werden, wie dies im Ausführungsbeispiel der Fig. 2a) der Fall ist.

Ferner weist die vorschlagsgemäße Vorrichtung 5 eine Heizeinheit 8 mit mindestens einem Infrarotheizer 9 auf. Dieser weist eine Infrarotstrahlungsquelle 10 auf. Wie in der Fig. 2a) gezeigt, wird der Schichtaufbau 7 durch die Heizeinheit 8 hindurchgeführt und, wie im Querschnitt gemäß Fig. 2c gezeigt, in der Heizeinheit 8 über zumindest einen Abschnitt T seiner Breite B im Querschnitt durch den mindestens einen Infrarotheizer 9 erwärmt. Durch das Erwärmen des Schichtaufbaus 7 wird hier und vorzugsweise ein Binder in und/oder auf den Faserlagen 4 aktiviert, welcher diese miteinander verbindet, insbesondere verklebt. Hierdurch können die Faserlagen 4 über ihrer Breite B, insbesondere auf nur einem Breitenabschnitt T, miteinander verbunden werden, so dass sich diese in nachfolgenden Verarbeitungsschritten zumindest im Bereich eines solchen Abschnitts T nicht relativ zueinander verschieben.

Grundsätzlich kann der Schichtaufbau in seiner gesamten Breite von der Heizeinheit 8 erwärmt werden, alternativ kann in der Breite jedoch auch nur ein vorbestimmter Bereich oder es können nur vorbestimmte Bereiche mit der Heizeinheit 8 erwärmt werden, wie dies auch in den Ausführungsbeispielen der Fall ist. In diesen erwärmten Bereichen werden die Faserlagen 4 dann miteinander verbunden. In den nicht erwärmten Bereichen können sich die Faserlagen 4 dann noch, beispielsweise während einer nachfolgenden Querumformung, relativ zueinander bewegen. Diese relative Bewegungsfreiheit der nicht erwärmten Bereiche kann aktiv für die Querumformung genutzt werden, so dass vorzugsweise ein nicht erwärmter Bereich nach dem Durchlaufen der Heizeinheit 8 querumgeformt wird.

Besonders bevorzugt werden bezogen auf die Förderrichtung F, insbesondere nur, die seitlichen Bereiche des Schichtaufbaus 7 erwärmt, wie dies im Ausführungsbeispiel der Fall ist, und/oder es wird bezogen auf die Förderrichtung F, insbesondere nur, ein Mittenbereich des Schichtaufbaus 7 erwärmt.

Wie in der Fig. 2c) ferner zu sehen ist, ist vorschlagsgemäß zwischen dem Schichtaufbau 7 und dem Infrarotheizer 9 eine infrarotstrahlungsdurchlässige Scheibe 11 angeordnet. Durch diesen Aufbau wird ein geschützter Raum 12 zwischen dem Schichtaufbau 7 und der Scheibe 11 geschaffen, welcher gleich mehrere Vorteile birgt.

Zum einen schafft er einen abgegrenzten Bereich, in welchem über die Steuerung der Infrarotstrahlungsquelle 10 die Temperatur sehr gut eingestellt und einfach, schnell und genau verstellt werden kann. Zudem schützt er den Schichtaufbau 7 im Bereich der Heizeinheit 8, und damit den Erwärmungsprozess vor Umgebungseinflüssen, insbesondere plötzlichen Temperaturabfällen in der Umgebung, wie diese beispielsweise durch das Öffnen eines Hallentores im Winter herbeigeführt werden können. Im Ergebnis wird ein besonders gleichmäßiges Erhitzen und ein sehr viel genaueres Einstellen und Halten der Temperatur des Schichtaufbaus 7 in dem bestrahlten Bereich (Abschnitt T) ermöglicht. Hierdurch kann insbesondere die Prozesssicherheit beim Aktivieren des Binders und damit die Qualität der Vorformlinge 3 nachhaltig gesteigert werden.

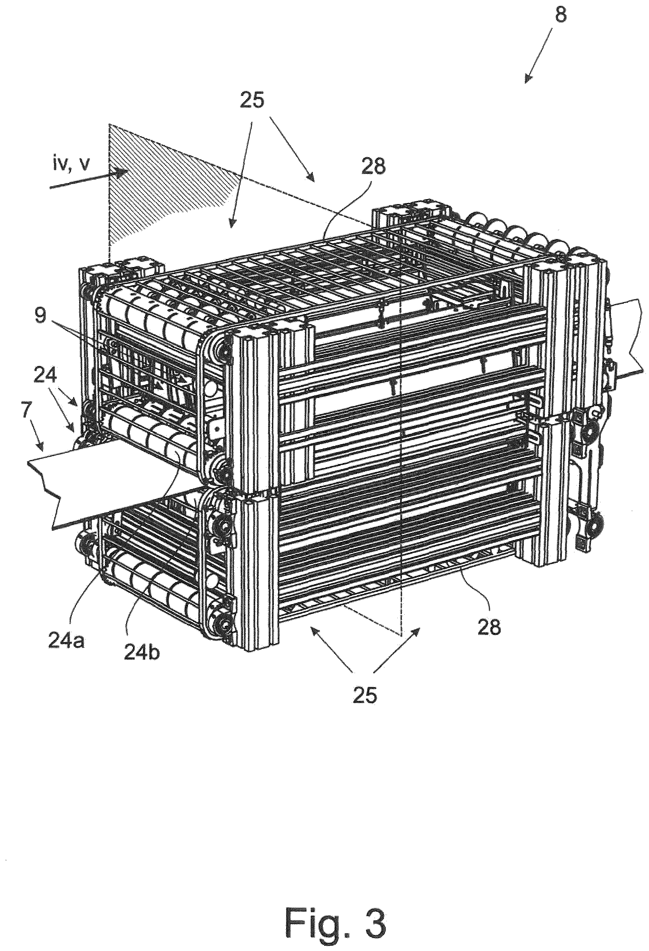

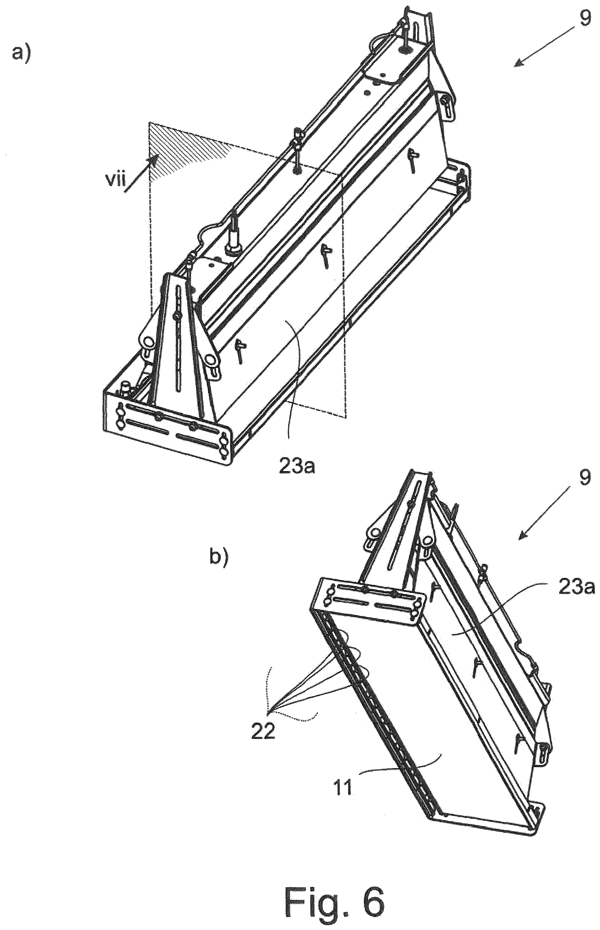

In der Fig. 3 ist eine dreidimensionale Darstellung der Heizeinheit 8 gezeigt. Diese wird später mit ihren konstruktiven Einzelheiten bzw. den Einzelheiten des Infrarotheizers 9 anhand der Figuren 3 bis 7 näher beschrieben.

Wie in der Fig. 2a) gezeigt, kann hinter der Heizeinheit 8 eine Schneideinheit 13 vorgesehen sein. Diese ist im Querschnitt orthogonal zur Förderrichtung F in Fig. 2d) gezeigt. Diese Schneideinheit 13 schneidet den Schichtaufbau 7 in Förderrichtung F, indem dieser durch die Schneideinheit 13 hindurchgefördert wird. Im Ausführungsbeispiel wird ein nicht in der Heizeinheit 8 erwärmter Bereich des Schichtaufbaus 7 in Förderrichtung von der Schneideinheit 13 geschnitten.

Nach der Heizeinheit 8 ist hier und vorzugsweise ferner eine Querumformungseinheit 14 vorgesehen, welche den Schichtaufbau 7 in ein vorbestimmtes Querschnittsprofil verformt. Das heißt der Schichtaufbau 7 wird um die Förderrichtung F verformt. Dies ist schematisch in der Fig. 2e) gezeigt. Vorzugsweise erfolgt die Querumformung durch das Führen des Schichtaufbaus 7 über einen, sich insbesondere kontinuierlich an die herzustellende Profilform anpassenden, Formkern 15, an welchen der Schichtaufbau 7 mittels Andruckrollen 16 angedrückt und umgeformt wird. Diesbezüglich wird insbesondere auf die Anmeldung DE 10 2010 014 704 A1 verwiesen, in welcher diese Querumformung beschrieben ist.

Insbesondere, wenn der Schichtaufbau 7 vor der Querumformung, wie in der Fig. 2d) gezeigt, von einer Schneideinheit 13 in Längsrichtung geschnitten wird, können die beiden so getrennten Abschnitte des Schichtaufbaus 7a, 7b einzeln in der Querumformungseinheit 14 umgeformt, beispielsweise zu L-Profilen, und anschließend zusammengeführt, insbesondere zu einem T-Profil, werden, wie dies in der Fig. 2b) gezeigt ist.

Nach der Querumformungseinheit 14 kann eine Längsumformungseinheit 17 vorgesehen sein. In der Längsumformungseinheit 17 kann der Schichtaufbau 7 um eine zur Förderrichtung F orthogonal gerichtete Achse umgeformt werden, beispielsweise zur Erzeugung einer vorbestimmten Längskrümmung. Diesbezüglich wird ebenfalls auf die Anmeldung DE 10 2010 014 704 A1 verwiesen, in welcher dies beschrieben ist.

Ferner kann eine Trenneinheit 18 vorgesehen sein, welche kontinuierlich hergestellte Vorformlinge 3 trennt, insbesondere quer zur Förderrichtung F. Zudem kann eine Fördereinheit 25 vorgesehen sein, mittels welcher der Schichtaufbau 7, insbesondere kontinuierlich durch die Vorrichtung 5 gefördert wird. Die Fördereinrichtung 25 kann vorzugsweise in der Heizeinheit 8 integriert und/oder hinter der Heizeinheit 8 angeordnet sein. Mit der Vorrichtung 1 wird der Vorformling 3 hier somit kontinuierlich hergestellt. Die Fördergeschwindigkeit bei der Herstellung der Vorformlinge 3 beträgt hier und vorzugsweise mindestens 100 mm/min, weiter vorzugsweise mindestens 200 mm/min, weiter vorzugsweise mindestens 400mm/min.

Nach dem Trennen werden die Vorformlinge 3 hier und vorzugsweise, insbesondere mittels eines Autoklaven 19, zu Flugzeugstrukturbauteilen 2 weiterverarbeitet. In diesem werden sie erhitzt, ggf. mit einem Reaktionsharz infiltriert, und ausgehärtet. Vor oder nach dem Aushärten können die Vorformlinge 3 bzw. Flugzeugstrukturbauteile 2 noch auf unterschiedliche Art und Weise weiterbearbeitet, insbesondere beschnitten, werden.

Ferner kann eine nicht gezeigte Imprägniereinheit vorgesehen sein, mittels der die durch die Vorrichtung laufenden Faserlagen 4 lokal oder vollständig mit einem Bindersystem ausrüstbar sind. Eine solche Imprägniereinheit ist vorzugsweise in die Bereitstellungseinheit 6 integriert und/oder vor der Heizeinheit 8 angeordnet.

Nachfolgend wird anhand der Figuren 3 bis 7 die Heizeinheit 8 mit dem Infrarotheizer 9 näher beschrieben.

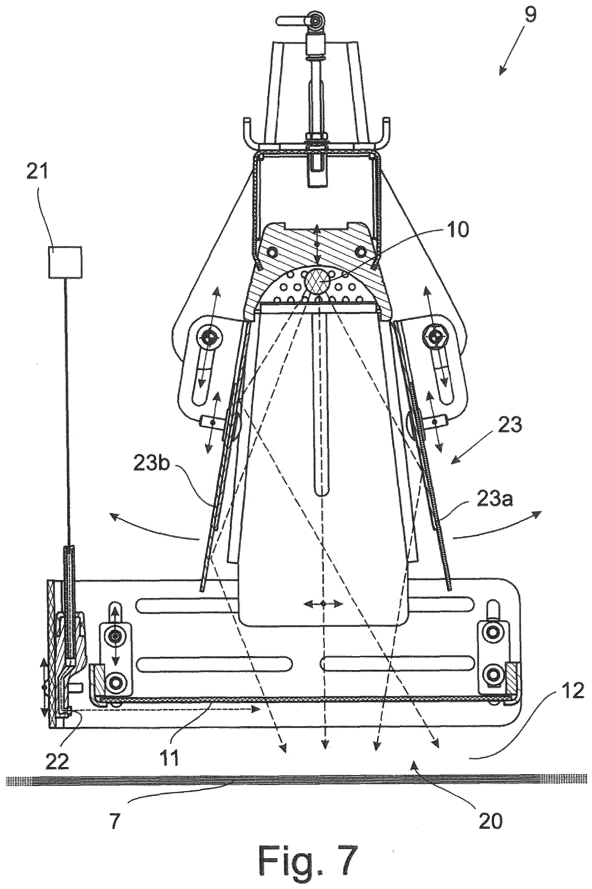

Wie bereits erläutert, wird durch die Scheibe 11 und den Schichtaufbau 7 ein geschützter Raum 12 bereitgestellt, welcher ein gleichmäßigeres Erwärmen des Schichtaufbaus 7 ermöglicht. Dazu ist hier und vorzugsweise, wie in der Figur 7 gezeigt, der Abstand zwischen dem Schichtaufbau 7 und der Scheibe 11 geringer als zwischen der Scheibe 11 und der Infrarotstrahlungsquelle 10 des Infrarotheizers 9. Hier beträgt der Abstand zwischen dem Schichtaufbau 7 und der Scheibe 11 unter 10 cm, weiter vorzugsweise unter 5 cm, weiter vorzugsweise unter 3 cm, weiter vorzugsweise im Wesentlichen 1,5 cm. Wie der Figur weiter entnommen werden kann, ist die Scheibe 11 im Wesentlichen parallel zur Faserlage 4 bzw. dem Schichtaufbau 7 angeordnet.

Der Schichtaufbau 7 und die Scheibe 11 bilden hier und vorzugsweise einen Strömungskanal 20 aus. Hier ist ferner eine Überdruckquelle 21 vorgesehen, über welche eine Gasströmung in dem Strömungskanal 20, insbesondere in dem Strahlungsbereich des Infrarotheizers 9, bereitgestellt wird. Bei dieser Gasströmung kann es sich insbesondere um eine Luftströmung handeln. Hierdurch kann die äußere Oberfläche des Schichtaufbaus 7 gekühlt werden, so dass ein gleichmäßigeres Erwärmen des Schichtaufbaus, und damit insbesondere auch der mittleren und/oder unteren Schichten des Schichtaufbaus 7, gewährleistet werden. Es wird also vorgeschlagen, beim Erwärmen des Schichtaufbaus 7 die äußere Oberfläche durch eine Gasströmung zu kühlen, während der Schichtaufbau mittels der Infrarotstrahlung erwärmt wird. Da ein größerer Anteil der Infrarotstrahlung nicht so tief in den Schichtaufbau eindringt, und daher die obere Schicht stärker erwärmt, kann auf diese Weise ein besonders gleichmäßiges Erwärmen des Schichtaufbaus über den gesamten bestrahlten Querschnitt erreicht werden.

Hier wird eine Temperatur des Schichtaufbaus 7 im bestrahlten Bereich (Abschnitt T) von 110°C +/-15°C, vorzugsweise +/-10°C, weiter vorzugsweise +/-5°C, weiter vorzugsweise +/-2,5°C, eingestellt.

Die Gasströmung kann insbesondere einen Richtungsvektor R entgegengesetzt und/oder orthogonal zu der Förderrichtung F des Schichtaufbaus 7 aufweisen. Insbesondere kann die Gasströmung entgegengesetzt oder orthogonal zu der Förderrichtung (F) gerichtet sein. Besonders bevorzugt strömt die Gasströmung wie im Ausführungsbeispiel im Wesentlichen orthogonal zur Förderrichtung F zwischen dem Schichtaufbau 7 und der Scheibe 11 im Bereich des Infrarotheizers 9 hindurch.

Hier sind faserlagenseitig der Scheibe 11 Auslassöffnungen 22 zum Bereitstellen der Gasströmung in dem Strömungskanal 20 vorgesehen. Diese sind hier und vorzugsweise im Wesentlichen orthogonal zur Förderrichtung F und/oder parallel zur Förderrichtung F, gerichtet. Die Gasströmung kann nach dem Überströmen des Schichtaufbaus 7 abgesaugt werden.

Hier und vorzugsweise ist der Infrarotheizer 9 relativ zu dem Schichtaufbau 7, insbesondere quer und/oder orthogonal zur Förderrichtung F, verstellbar. Hier und vorzugsweise wird hierzu der Infrarotheizer 9 als Ganzes verstellt. Zur Fertigung von Vorformlingen 3 mit unterschiedlichem Querschnittsprofil auf derselben Vorrichtung 5 können so in der Breite B verschiedene vorbestimmte Bereiche mit der Heizeinheit 8 erwärmt werden.

Ferner kann der Infrarotheizer 9 einen, insbesondere verstellbaren, Reflektor 23 aufweisen. Mit diesem kann beispielsweise die Breite des Abschnitts T quer zur Förderrichtung F eingestellt werden, auf weiche die Infrarotstrahlungsquelle 10 auf den Schichtaufbau 7 einwirkt.

Wie in der Fig. 7 gezeigt, weist der Reflektor 23 hier und vorzugsweise zwei Reflektorelemente 23a, 23b auf. Diese sind in Förderrichtung F seitlich der Infrarotstrahlungsquelle 10 angeordnet und begrenzen ihre Abstrahlung. Hier und vorzugsweise sind sie bezogen auf eine Ebene parallel zur Förderrichtung F und orthogonal zum Schichtaufbau 7 in der Heizeinheit 8 schräg angeordnet. Vorzugsweise in einem Winkel zwischen 7° und 15°, vorzugsweise zwischen 10° und 12°, zu der Ebene. Hierdurch kann eine besonders gleichmäßige Erwärmung über den mit der Infrarotstrahlungsquelle 10 bestrahlten Bereich erreicht werden. Zur Einstellung lässt sich hier und vorzugsweise nicht nur der Schrägungswinkel, sondern auch der Abstand der Reflektorelemente 23a, 23b bzw. deren Länge einstellen.

Hier und vorzugsweise ist die Scheibe 11 dem Infrarotheizer 9 zugeordnet und an diesem befestigt. Wird der Infrarotheizer 9 verstellt, kann also die Scheibe 11 mitverstellt werden. Alternativ kann jedoch auch vorgesehen sein, dass die Scheibe 11 dem Infrarotheizer 9 nicht zugeordnet ist. Beispielsweise kann sie fest in der Heizeinheit 8 eingebaut sein und lediglich vom Infrarotheizer 9 bestrahlt werden. In diesem Fall wird hier und vorzugsweise nur der Infrarotheizer 9 und mit ihm ggf. sein Reflektor 23 verstellt, nicht jedoch die Scheibe 11.

Hier ist die Scheibe 11 zudem relativ zur Infrarotstrahlungsquelle 10 verstellbar, wie dies in der Fig. 7 gezeigt ist. Sie kann in ihrem Abstand zur Infrarotstrahlungsquelle 10 und/oder im Wesentlichen parallel zum Schichtaufbau 7 relativ zur Infrarotstrahlungsquelle 10 verstellt werden.

Zusätzlich oder alternativ kann die Auslassöffnung 22 dem Infrarotheizer 9 zugeordnet sein. Die Auslassöffnungen 22 sind hier fest zur Scheibe 11 angeordnet, können jedoch relativ zur Infrarotstrahlungsquelle 10 verstellt werden. Besonders einfach kann hier somit der zu bestrahlende Bereich verstellt werden, indem der Infrarotheizer 9 als Ganzes relativ zum Schichtaufbau 7 verstellbar ist. Dabei werden hier die Auslassöffnungen 22 mitverstellt, so dass die Gasströmung relativ zur Scheibe 11 und zur Infrarotstrahlungsquelle 10 im Wesentlichen gleich bleibt.

Betrieben wird die Infrarotstrahlungsquelle 10 hier und vorzugsweise mit 60% bis 95% der Nennleistung. In diesem Fall ergibt sich ein besonders bevorzugtes Abstrahlungsspektrum der Infrarotstrahlungsquelle 10 zum Erwärmen des Schichtaufbaus 7.

Die Leistung der Infrarotstrahlungsquelle 10 wird vorzugsweise über ihre Intensität und/oder durch ein Pulsen derselben eingestellt. Gesteuert wird die Vorrichtung durch eine Steuerung S. Diese steuert auch die Infrarotstrahlungsquelle 10.

Wie den Figuren 3 bis 5 entnommen werden kann, weist die Heizeinheit 8 vorzugsweise nicht nur einen Infrarotheizer 9, sondern mindestens einen weiteren Infrarotheizer 9 auf. Vorzugsweise ist mindestens ein Infrarotheizer 9, vorzugsweise sind mindestens zwei Infrarotheizer 9, vorgesehen, welche von oben den Schichtaufbau 7 erwärmen, und/oder, es ist mindestens ein Infrarotheizer 9, vorzugsweise sind mindestens zwei Infrarotheizer 9, vorgesehen, welche von unten den Schichtaufbau 7 erwärmen. In den Ausführungsbeispielen sind genau zwei Infrarotheizer 9 vorgesehen, welche von oben den Schichtaufbau 7 erwärmen und genau zwei Infrarotheizer 9 vorgesehen, welche von unten den Schichtaufbau 7 erwärmen.

Hier und vorzugsweise sind die Infrarotheizer 9 spiegelsymmetrisch zu dem Schichtaufbau 7 angeordnet. Auf diese Weise kann ein möglichst gleichmäßiges Erwärmen der bestrahlten Bereiche des Schichtaufbaus 7 durch ihren Querschnitt erreicht werden.

In der Fig. 3 ist ferner eine Kompaktierungseinheit 24 gezeigt. Hier und vorzugsweise ist eine Kompaktierungseinheit 24 zum Zusammenpressen des Schichtaufbaus 7 vor und/oder nach dem Eintritt der Faserlagen 4 in die Heizeinheit 8 und/oder vor und/oder nach dem Austritt der Faserlagen 4 aus der Heizeinheit 8 vorgesehen. Die Kompaktierungseinheit 24 weist zum Zusammenpressen vorzugsweise Walzen 24a, 24b auf. Die Walzen, insbesondere der Kompaktierungseinheit 24 am Eingang der Heizeinheit 8, können beheizbar sein.

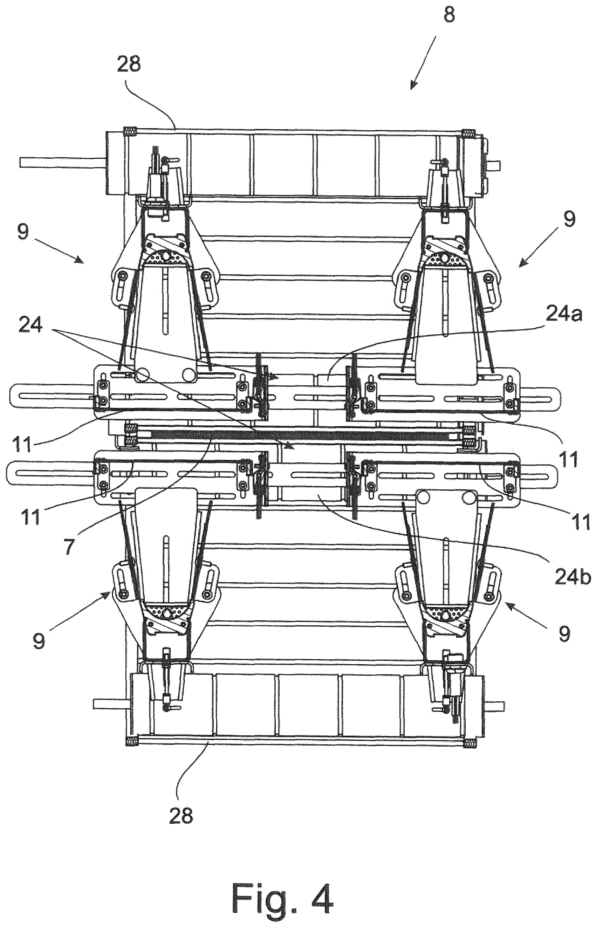

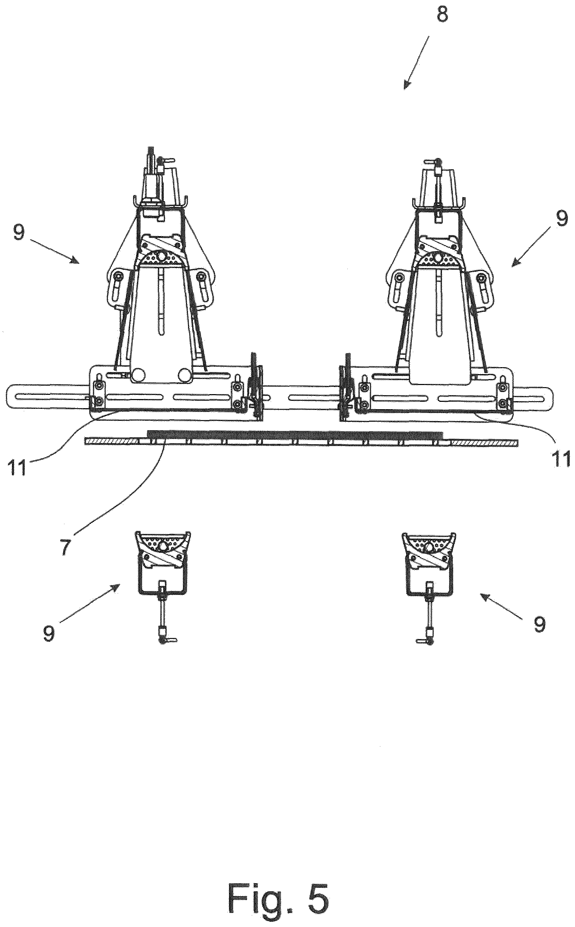

Im Ausführungsbeispiel der Fig. 4 sind alle Infrarotheizer 9 wie zuvor beschrieben ausgebildet. Dies ist auch vorzugsweise der Fall. Besonders bevorzugt sind sie dann baugleich. Alternativ können jedoch, wie im Ausführungsbeispiel der Fig. 5 gezeigt, die Infrarotheizer 9 auch unterschiedlich ausgebildet sein. Im Ausführungsbeispiel der Fig. 5 sind nur zwischen den oberen Infrarotheizern und dem Schichtaufbau 7 Scheiben 11 vorgesehen. Von unten wird der Schichtaufbau 7 von einer Tragplatte 26 getragen, welche großflächige Löcher 27 im Abstrahlungsbereich der unteren Infrarotheizer 9 aufweist, durch welche der Schichtaufbau 7 von unten erwärmt wird.

Im Ausführungsbeispiel der Fig. 5 wird der Schichtaufbau 7 durch eine Netzstruktur und/oder Leiterstruktur 28 getragen. Diese ist flexibel ausgebildet, hier als Endlosband. Sie dient zum Tragen und/oder Fördern des Schichtaufbaus 7 durch die Heizeinheit 8. Hierzu kann sie angetrieben werden.

## Patentansprüche

1. Vorrichtung zum Herstellen von Vorformlingen (3) für Flugzeugstrukturbauteile (2), mit einer Bereitstellungseinheit (6) zum kontinuierlichen Bereitstellen von einem Schichtaufbau (7) mit mindestens einer Faserlage (4), mit einer Heizeinheit (8) mit mindestens einem Infrarotheizer (9), welcher eine Infrarotstrahlungsquelle (10) aufweist, wobei der bereitgestellte Schichtaufbau (7) in einer Förderrichtung (F) durch die Heizeinheit (8) hindurchgeführt wird und dort über zumindest einen Teil seiner Breite (B) im Querschnitt durch den mindestens einen Infrarotheizer (9) erwärmbar ist, wobei zwischen dem Schichtaufbau (7) und dem Infrarotheizer (9) eine infrarotstrahlungsdurchlässige Scheibe (11) angeordnet ist.

2. Vorrichtung nach Anspruch 1, **dadurch gekennzeichnet, dass** die Vorrichtung (5) eine Schneideinheit (13) zum Schneiden des Schichtaufbaus (7) entlang der Förderrichtung (F) und/oder eine Querumformungseinheit (14) zum Formen des Schichtaufbaus (7) in ein Querschnittsprofil entlang der Förderrichtung (F) aufweist.

3. Vorrichtung nach Anspruch 1 oder 2, **dadurch gekennzeichnet, dass** der Abstand zwischen dem Schichtaufbau (7) und der Scheibe (11) geringer ist als zwischen der Scheibe (11) und der Infrarotstrahlungsquelle (10) des Infrarotheizers (9), und/oder, dass der Abstand zwischen dem Schichtaufbau (7) und der Scheibe (11) unter 10 cm, weiter vorzugsweise unter 5 cm, weiter vorzugsweise unter 3 cm, weiter vorzugsweise im Wesentlichen 1,5 cm, beträgt.

4. Vorrichtung nach einem der vorhergehenden Ansprüche, **dadurch gekennzeichnet, dass** der Schichtaufbau (7) und die Scheibe (11) einen Strömungskanal (20) ausbilden, vorzugsweise, dass über eine Überdruckquelle (21) eine Gasströmung in dem Strömungskanal (20), insbesondere in dem Strahlungsbereich des Infrarotheizers (9), bereitgestellt wird.

5. Vorrichtung nach einem der vorhergehenden Ansprüche, **dadurch gekennzeichnet, dass** die Gasströmung einen Richtungsvektor entgegengesetzt und/oder orthogonal zu der Förderrichtung (F) aufweist oder entgegengesetzt oder orthogonal zu der Förderrichtung (F) gerichtet ist.

6. Vorrichtung nach einem der vorhergehenden Ansprüche, **dadurch gekennzeichnet, dass** faserlagenseitig der Scheibe (11) Auslassöffnungen (22) zum Bereitstellen der Gasströmung in dem Strömungskanal (20) vorgesehen sind, vorzugsweise, dass die Auslassöffnungen (22) im Wesentlichen orthogonal zur Förderrichtung (F) gerichtet sind.

7. Vorrichtung nach einem der vorhergehenden Ansprüche, **dadurch gekennzeichnet, dass** der Infrarotheizer (9) relativ zu dem Schichtaufbau (7), insbesondere quer und/oder orthogonal zur Förderrichtung (F), verstellbar ist.

8. Vorrichtung nach einem der vorhergehenden Ansprüche, **dadurch gekennzeichnet, dass** der Infrarotheizer (9) einen, insbesondere verstellbaren, Reflektor (23) aufweist, mittels dem die Breite (B) quer zur Förderrichtung (F) eingestellt werden kann, auf welcher die Infrarotstrahlungsquelle (10) auf den Schichtaufbau (7) einwirkt.

9. Vorrichtung nach einem der vorhergehenden Ansprüche, **dadurch gekennzeichnet, dass** die Vorrichtung (5) eine Steuerung (S) aufweist, vorzugsweise, dass die Leistung der Infrarotstrahlungsquelle (10) mittels der Steuerung (S) einstellbar ist, insbesondere durch Pulsen und/oder über die Intensität der Infrarotstrahlungsquelle (10).

10. Vorrichtung nach einem der vorhergehenden Ansprüche, **dadurch gekennzeichnet, dass** die Heizeinheit (8) mindestens einen weiteren Infrarotheizer (9) aufweist, vorzugsweise, dass mindestens ein Infrarotheizer (9), insbesondere mindestens zwei Infrarotheizer (9), vorgesehen sind, welche von oben den Schichtaufbau (7) erwärmen, und/oder, dass mindestens ein Infrarotheizer (9), insbesondere mindestens zwei Infrarotheizer (9), vorgesehen sind, welche von unten den Schichtaufbau (7) erwärmen.

11. Vorrichtung nach einem der vorhergehenden Ansprüche, **dadurch gekennzeichnet, dass** eine Kompaktierungseinheit (24) zum Zusammenpressen des Schichtaufbaus (7) vorgesehen ist, vorzugsweise, dass vor und/oder nach dem Eintritt der Faserlagen (4) in die Heizeinheit (8) und/oder vor und/oder nach dem Austritt der Faserlagen (4) aus der Heizeinheit (8) eine Kompaktierungseinheit vorgesehen ist.

12. Verfahren zum Herstellen von Vorformlingen für Flugzeugstrukturbauteile, insbesondere mit einer Vorrichtung (5) nach einem der vorhergehenden Ansprüche, wobei ein Schichtaufbau (7) aus mindestens eine Faserlage (4) kontinuierlich von einer Bereitstellungseinheit (6) bereitgestellt wird, wobei der Schichtaufbau (7) durch eine Heizeinheit (8) hindurchgeführt wird und dort über zumindest einen Teil seiner Breite (B) im Querschnitt durch mindestens einen Infrarotheizer (9) erwärmt wird, wobei der Schichtaufbau (7) an dem Infrarotheizer (9) durch eine infrarotstrahlungsdurchlässige Scheibe (11) von diesem getrennt an diesem vorbeigefördert wird.

13. Verfahren nach Anspruch 12, **dadurch gekennzeichnet, dass** der Schichtaufbau (7) in seiner gesamten Breite (B) von der Heizeinheit (8) erwärmt wird, und/oder, dass in der Breite (B) nur ein vorbestimmter Bereich und/oder vorbestimmte Bereiche mit der Heizeinheit (8) erwärmt wird bzw. werden, vorzugsweise, dass ein nicht erwärmter Bereich nach dem durchlaufen der Heizeinheit (8) querumgeformt wird.

14. Verfahren nach Anspruch 12 oder 13, **dadurch gekennzeichnet, dass** zur Fertigung von Vorformlingen (3) mit verschiedenen Querschnittsprofilen in der Breite (B) verschiedene vorbestimmte Bereiche mit der Heizeinheit (8) erwärmt werden.

15. Verfahren nach einem der Ansprüche 12 bis 14, **dadurch gekennzeichnet, dass** bezogen auf die Förderrichtung (F) die seitlichen Bereiche des Schichtaufbaus (7) erwärmt werden und/oder dass bezogen auf die Förderrichtung (F) ein Mittenbereich des Schichtaufbaus (7) erwärmt wird.

## Claims

1. Device for the production of preforms (3) for aircraft structural components (2), having a supply unit (6) for the continuous supply of a layer structure (7) with at least one fibre layer (4), having a heating unit (8) with at least one infrared heater (9) which has an infrared radiation source (10), wherein the supplied layer structure (7) is passed through the heating unit (8) in a conveying direction (F) and can be heated there over at least part of its width (B) in cross section by the at least one infrared heater (9), wherein a plate (11) which is permeable to infrared radiation is arranged between the layer structure (7) and the infrared heater (9) .

2. Device according to Claim 1, **characterized in that** the device (5) has a cutting unit (13) for cutting the layer structure (7) along the conveying direction (F) and/or a transverse shaping unit (14) for shaping the layer structure (7) into a cross-sectional profile along the conveying direction (F).

3. Device according to Claim 1 or 2, **characterized in that** the distance between the layer structure (7) and the plate (11) is smaller than between the plate (11) and the infrared radiation source (10) of the infrared heater (9), and/or **in that** the distance between the layer structure (7) and the plate (11) is below 10 cm, further preferably below 5 cm, further preferably below 3 cm, further preferably substantially 1.5 cm.

4. Device according to one of the preceding claims, **characterized in that** the layer structure (7) and the plate (11) form a flow channel (20), preferably **in that** a gas flow is supplied in the flow channel (20), in particular in the radiation region of the infrared heater (9), via an overpressure source (21).

5. Device according to one of the preceding claims, **characterized in that** the gas flow has a direction vector opposing and/or orthogonal to the conveying direction (F) or is directed opposing or orthogonally to the conveying direction (F).

6. Device according to one of the preceding claims, **characterized in that** outlet openings (22) for supplying the gas flow in the flow channel (20) are provided on the fibre layer side of the plate (11), preferably **in that** the outlet openings (22) are directed substantially orthogonally to the conveying direction (F).

7. Device according to one of the preceding claims, **characterized in that** the infrared heater (9) is adjustable relative to the layer structure (7), in particular transversely and/or orthogonally to the conveying direction (F).

8. Device according to one of the preceding claims, **characterized in that** the infrared heater (9) has an, in particular adjustable, reflector (23) by means of which the width (B) transverse to the conveying direction (F), over which width the infrared radiation source (10) acts on the layer structure (7), can be set.

9. Device according to one of the preceding claims, **characterized in that** the device (5) has a controller (S), preferably **in that** the output of the infrared radiation source (10) can be set by means of the controller (S), in particular by pulsing and/or via the intensity of the infrared radiation source (10).

10. Device according to one of the preceding claims, **characterized in that** the heating unit (8) has at least one further infrared heater (9), preferably **in that** at least one infrared heater (9), in particular at least two infrared heaters (9), is/are provided and heats/heat the layer structure (7) from above, and/or **in that** at least one infrared heater (9), in particular at least two infrared heaters (9), is/are provided which heat the layer structure (7) from below.

11. Device according to one of the preceding claims, **characterized in that** a compacting unit (24) for compressing the layer structure (7) is provided, preferably **in that** a compacting unit is provided before and/or after the entry of the fibre layers (4) into the heating unit (8) and/or before and/or after the exit of the fibre layers (4) from the heating unit (8).

12. Method for the production of preforms for aircraft structural components, in particular with a device (5) according to one of the preceding claims, wherein a layer structure (7) comprising at least one fibre layer (4) is continuously supplied by a supply unit (6), wherein the layer structure (7) is passed through a heating unit (8) and heated there over at least part of its width (B) in cross section by at least one infrared heater (9), wherein the layer structure (7) is conveyed past the infrared heater (9) in a manner separated from said infrared heater by a plate (11) which is permeable to infrared radiation.

13. Method according to Claim 12, **characterized in that** the layer structure (7) is heated over its entire width (B) by the heating unit (8), and/or **in that** only a predefined region and/or predefined regions of the width (B) is/are heated using the heating unit (8), preferably in that a region which is not heated is transversely shaped after it has passed through the heating unit (8).

14. Method according to Claim 12 or 13, **characterized in that** different predetermined regions are heated using the heating unit (8) in order to produce preforms (3) with different cross-sectional profiles in terms of the width (B).

15. Method according to one of Claims 12 to 14, **characterized in that** the side regions of the layer structure (7) with respect to the conveying direction (F) are heated and/or a central region of the layer structure (7) with respect to the conveying direction (F) is heated.

## Revendications

1. Dispositif pour la fabrication de préformes (3) pour des composants structuraux d'aéronefs (2), muni d'une unité de fourniture (6) pour la fourniture continue d'une construction en couches (7) munie d'au moins une couche de fibres (4), muni d'une unité de chauffage (8) munie d'au moins un appareil de chauffage à infrarouge (9), qui comprend une source de rayonnement infrarouge (10), la construction en couches fournie (7) étant passée à travers l'unité de chauffage (8) dans une direction de transport (F) et pouvant y être chauffée sur au moins une partie de sa largeur (B) dans la section transversale par l'au moins un appareil de chauffage à infrarouge (9), une plaque perméable au rayonnement infrarouge (11) étant agencée entre la construction en couches (7) et l'appareil de chauffage à infrarouge (9).

2. Dispositif selon la revendication 1, **caractérisé en ce que** le dispositif (5) comprend une unité de coupe (13) pour la coupe de la construction en couches (7) le long de la direction de transport (F) et/ou une unité de déformation transversale (14) pour la mise en forme de la construction en couches (7) dans un profil de section transversale le long de la direction de transport (F).

3. Dispositif selon la revendication 1 ou 2, **caractérisé en ce que** la distance entre la construction en couches (7) et la plaque (11) est inférieure à celle entre la plaque (11) et la source de rayonnement infrarouge (10) de l'appareil de chauffage à infrarouge (9), et/ou **en ce que** la distance entre la construction en couches (7) et la plaque (11) est inférieure à 10 cm, plus préférentiellement inférieure à 5 cm, plus préférentiellement inférieure à 3 cm, plus préférentiellement d'essentiellement 1,5 cm.

4. Dispositif selon l'une quelconque des revendications précédentes, **caractérisé en ce que** la construction en couches (7) et la plaque (11) forment un canal d'écoulement (20), de préférence **en ce qu'**un courant de gaz est fourni par l'intermédiaire d'une source de surpression (21) dans le canal d'écoulement (20), notamment dans la zone de rayonnement de l'appareil de chauffage à infrarouge (9).

5. Dispositif selon l'une quelconque des revendications précédentes, **caractérisé en ce que** le courant de gaz présente un vecteur de direction en sens opposé et/ou orthogonalement à la direction de transport (F) ou est dirigé en sens opposé ou orthogonalement à la direction de transport (F).

6. Dispositif selon l'une quelconque des revendications précédentes, **caractérisé en ce que** des ouvertures de sortie (22) pour la fourniture du courant de gaz dans le canal d'écoulement (20) sont prévues du côté de la couche de fibres de la plaque (11), de préférence **en ce que** les ouvertures de sortie (22) sont dirigées essentiellement orthogonalement à la direction de transport (F).

7. Dispositif selon l'une quelconque des revendications précédentes, **caractérisé en ce que** l'appareil de chauffage à infrarouge (9) est réglable par rapport à la construction en couches (7), notamment transversalement et/ou orthogonalement à la direction de transport (F).

8. Dispositif selon l'une quelconque des revendications précédentes, **caractérisé en ce que** l'appareil de chauffage à infrarouge (9) comprend un réflecteur (23), notamment réglable, au moyen duquel la largeur (B) sur laquelle la source de rayonnement infrarouge (10) agit sur la construction en couches (7) peut être ajustée transversalement à la direction de transport (F).

9. Dispositif selon l'une quelconque des revendications précédentes, **caractérisé en ce que** le dispositif (5) comprend une commande (S), de préférence en ce que la puissance de la source de rayonnement infrarouge (10) est ajustable au moyen de la commande (S), notamment par des impulsions et/ou par l'intermédiaire de l'intensité de la source de rayonnement infrarouge (10).

10. Dispositif selon l'une quelconque des revendications précédentes, **caractérisé en ce que** l'unité de chauffage (8) comprend au moins un appareil de chauffage à infrarouge supplémentaire (9), de préférence **en ce qu'**au moins un appareil de chauffage à infrarouge (9), notamment au moins deux appareils de chauffage à infrarouge (9), sont prévus, qui chauffent la construction en couches (7) par le haut, et/ou **en ce qu'**au moins un appareil de chauffage à infrarouge (9), notamment au moins deux appareils de chauffage à infrarouge (9), sont prévus, qui chauffent la construction en couches (7) par le bas.

11. Dispositif selon l'une quelconque des revendications précédentes, **caractérisé en ce qu'**une unité de compactage (24) est prévue pour la compression de la construction en couches (7), de préférence **en ce qu'**une unité de compactage est prévue avant et/ou après l'entrée des couches de fibres (4) dans l'unité de chauffage (8) et/ou avant et/ou après la sortie des couches de fibres (4) de l'unité de chauffage (8).

12. Procédé de fabrication de préformes pour des composants structuraux d'aéronefs, notamment avec un dispositif (5) selon l'une quelconque des revendications précédentes, une construction en couches (7) d'au moins une couche de fibres (4) étant fournie en continu par une unité de fourniture (6), la construction en couches (7) étant passée à travers une unité de chauffage (8) et y étant chauffée sur au moins une partie de sa largeur (B) dans la section transversale par au moins un appareil de chauffage à infrarouge (9), la construction en couches (7) étant déplacée devant l'appareil de chauffage à infrarouge (9) de manière séparée de celui-ci par une plaque perméable au rayonnement infrarouge (11).

13. Procédé selon la revendication 12, **caractérisé en ce que** la construction en couches (7) est chauffée dans sa largeur totale (B) par l'unité de chauffage (8), et/ou **en ce que**, dans la largeur (B), uniquement une zone prédéterminée et/ou des zones prédéterminées est ou sont chauffées avec l'unité de chauffage (8), de préférence **en ce qu'**une zone non chauffée est déformée transversalement après le passage dans l'unité de chauffage (8) .

14. Procédé selon la revendication 12 ou 13, **caractérisé en ce que**, pour la production de préformes (3) ayant différents profils de section transversale dans la largeur (B), différentes zones prédéterminées sont chauffées avec l'unité de chauffage (8).

15. Procédé selon l'une quelconque des revendications 12 à 14, **caractérisé en ce que**, par rapport à la direction de transport (F), les zones latérales de la construction en couches (7) sont chauffées, et/ou **en ce que**, par rapport à la direction de transport (F), une zone centrale de la construction en couches (7) est chauffée.
